# EUROPÄISCHE PATENTSCHRIFT

(11) **EP 0 730 728 B1**
(45) Veröffentlichungstag und Bekanntmachung des Hinweises auf die Patenterteilung: **03.02.1999**
(21) Anmeldenummer: 95902040.5
(22) Anmeldetag: 24.11.1994
(51) Int. Cl.: G01C 21/20, G07B 15/00

(54) **EINRICHTUNG IN EINEM FAHRZEUG ZUR FESTSTELLUNG DES BEFAHRENS EINER TEILSTRECKE EINES VORGEGEBENEN STRASSENNETZES**
DEVICE IN A VEHICLE TO DETERMINE ENTRY INTO A PARTIAL SECTION OF A PREDETERMINED ROAD SYSTEM
SYSTEME PLACE DANS UN VEHICULE POUR DETERMINER LE PASSAGE DUDIT VEHICULE SUR UN TRONCON D'UN RESEAU ROUTIER PREDEFINI

(30) Priorität: 26.11.1993 DE 4340840
(43) Veröffentlichungstag der Anmeldung: 11.09.1996
(73) Patentinhaber: MANNESMANN Aktiengesellschaft, 40213 Düsseldorf (DE)
(72) Erfinder: WIDL, Andreas, D-81667 München (DE); FÄRBER, Niko, D-91058 Erlangen (DE); GINZINGER, Peter, D-83224 Grassau (DE)
(74) Vertreter: Meissner, Peter E., Dipl.-Ing.
(86) Internationale Anmeldenummer: DE9401430
(87) Internationale Veröffentlichungsnummer: WO9514909

(56) Entgegenhaltungen:
- EP-A- 0 394 517
- WO-A-88/09916
- DE-A- 3 609 288
- US-A- 4 760 531
- US-A- 4 924 402
- PATENT ABSTRACTS OF JAPAN vol. 8, no. 18 (P-250) (1455) 26. Januar 1984 & JP,A,58 178 214 (MITSUBISHI) 19. Oktober 1983

## Beschreibung

Die Erfindung betrifft eine Einrichtung in einem Fahrzeug zur Feststellung des Befahrens einer Teilstrecke eines vorgegebenen, insbesondere eines nutzungsgebührenpflichtigen Straßennetzes durch ein Fahrzeug gemäß dem Gattungsbegriff des Patentanspruchs 1.

In der nicht vorveröffentlichten DE 43 10 099 A1 ist eine Einrichtung beschrieben, die von einem Fahrzeug mitgeführt werden kann und zur Abrechnung von Straßennutzungsgebühren (z.B. Autobahnmaut) einsetzbar ist. Diese Einrichtung weist in einer bevorzugten Ausführungsform ein Empfangssystem auf für den drahtlosen Empfang von Signalen, insbesondere von Signalen für die Satellitennavigation, eine Recheneinrichtung, die zur Bestimmung der aktuellen geografischen Fahrzeugposition aus diesen Daten eingerichtet ist, ferner eine Speichereinrichtung für die digitale Speicherung des nutzungsgebührenpflichtigen Straßennetzes (Landkartenspeicher), in der die Koordinaten der Verzweigungen (Ein- und Ausfahrten in dieses Straßennetz, Abzweige und Kreuzungen der Straßen dieses Straßennetzes) als Identifikationspunkte gespeichert sind, sowie eine Speichereinrichtung für die digitale Speicherung der von der Recheneinrichtung ermittelten Fahrzeugpositionsdaten und Speichereinrichtungen für Angaben zum Straßennutzungstarif sowie für die wertmäßige Verbuchung der von der Recheneinrichtung ermittelten Nutzungsdaten. Die Recheneinrichtung kann dabei anhand des fortlaufenden Vergleichs der Positionsdaten des Fahrzeugs mit den geografischen Daten des Wegstreckenverlaufs innerhalb des gebührenpflichtigen Straßennetzes ermitteln, welche Streckenabschnitte dieses Straßennetzes vom Fahrzeug benutzt wurden.

Die Angaben über die aktuelle Fahrzeugposition werden durch die entsprechenden Koordinaten (Latitude, Longitude) dieser Position eindeutig festgelegt. In entsprechender Weise liegen auch die Angaben über den Verlauf des gebührenpflichtigen Straßennetzes vor. Das bedeutet, daß das Straßennetz durch eine Vielzahl von geografischen Punkten, die gedanklich durch gerade Linien miteinander verbunden sind, in Form eines Polygonzugs als näherungsweises Modell im Speicher der Einrichtung festgelegt ist. Der Polygonzug entspricht dabei etwa dem Verlauf der Mittellinie der einzelnen Straßen im nutzungsgebührenpflichtigen Straßennetz.

Wenn sich ein Fahrzeug zunächst auf einem nutzungsgebührenfreien Verkehrsweg befindet und dann den Ort einer Einfahrt in das nutzungsgebührenpflichtige Straßennetz erreicht, kommt es für die richtige Zurechnung der fälligen Nutzungsgebühren darauf an, genau zu wissen, ob tatsächlich dieses Fahrzeug das nutzungsgebührenpflichtige Straßennetz betreten hat. Eine Schwierigkeit hierbei liegt darin, daß die Genauigkeit des verwendeten Positionsbestimmungssystems begrenzt ist und ein unmittelbarer Vergleich der Positionsdaten des Fahrzeugs mit den Daten der digitalisierten Landkarte im Regelfall keine genaue Übereinstimmung zeigen wird. So liegt etwa die Genauigkeit des Satellitennavigationssystems GPS (GLOBAL POSITIONING SYSTEM) nur bei etwa 100 m, also erheblich über der Größenordnung einer Fahrbahnbreite. Hinzu kommt, daß beispielsweise das Erreichen des geometrischen Mittelpunktes einer Einfahrtstelle durch das Fahrzeug noch nicht gleichbedeutend damit ist, daß das Fahrzeug wirklich auf die Autobahn aufgefahren ist, da es auch möglich ist, daß das Fahrzeug über eine Brücke oder durch eine Unterführung im Einfahrtbereich lediglich die Autobahn überquert und auf der gebührenfreien Zubringerstraße bleibt. Dies führt dazu, daß in manchen Fällen von der Einrichtung des Fahrzeugs nicht sicher entschieden werden kann, ob eine ermittelte Fahrzeugposition, beispielsweise einer nutzungsgebührenfreien oder aber einer nutzungsgebührenpflichtigen Straße zuzurechnen ist. Es muß aber bei einer solchen Einrichtung sichergestellt sein, daß der Benutzer des Fahrzeugs unter keinen Umständen unberechtigterweise zur Zahlung von Straßennutzungsgebühren herangezogen wird.

Die Aufgabe der Erfindung besteht daher darin, eine Einrichtung in einem Fahrzeug anzugeben, die es ermöglicht, eine schnelle und sehr sichere Entscheidung darüber zu treffen, ob ein Fahrzeug in ein vorgegebenes, durch eine digitalisierte Landkarte definiertes Straßennetz eingefahren ist und tatsächlich eine Teilstrecke dieses Straßennetzes befährt oder bereits befahren hat.

Gelöst wird diese Aufgabe bei einer gattungsgemäßen Einrichtung durch die kennzeichnenden Merkmale des Patentanspruchs 1. Vorteilhafte Weiterbildungen der Erfindung sind in den Unteransprüchen 2 bis 8 angegeben.

Nachfolgend wird die Erfindung anhand des in den Figuren dargestellten Beispiels einer Autobahnsteilstrecke vornehmlich vor dem Hintergrund einer Autobahnnutzungsgebührenabrechnung näher erläutert. Es zeigen:
- Fig. 1: einen Landkartenausschnitt mit einem Autobahnteilstück,
- Fig. 2: eine Aufteilung des Autobahnteilstücks der Fig. 1 in Segmente,
- Fig. 3: ein aus Segmenten gebildetes "Toleranzmodell" eines Autobahnteilstücks und
- Fig. 4: eine vergrößerte Darstellung der beiden ersten Segmente eines "Toleranzmodells" eines Autobahnteilstücks.

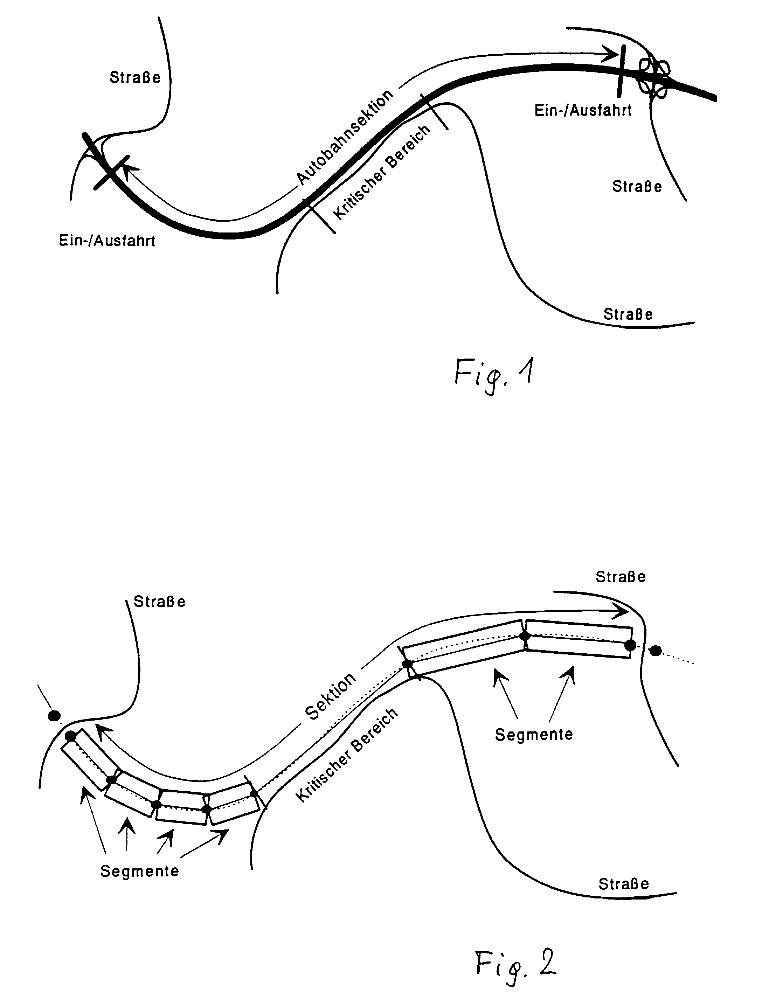

In Fig. 1 ist ein schematischer Ausschnitt aus einer Straßenkarte mit einem zwischen zwei unmittelbar aufeinanderfolgenden Ein-/Ausfahrten liegenden Autobahnteilstück dargestellt. Ein solches Autobahnteilstück wird im folgenden auch als Sektion bezeichnet. Außer der Autobahn, die Bestandteil eines vorgegebenen, insbesondere eines nutzungsgebührenpflichtigen Straßennetzes ist, gibt es weitere Straßen, die nutzungsgebührenfrei sind und von denen zwei als Zubringerstraße zur Autobahn anzusehen sind, da sie jeweils zu einer Ein-/Ausfahrt der Autobahn führen. Eine weitere gebührenfreie Straße verläuft über eine längere Teilstrecke in einem sehr geringem Abstand parallel zur Autobahn. Dieser Bereich ist in Fig. 1 als "kritischer Bereich" bezeichnet, da der Abstand zur Autobahn in diesem Bereich im wesentlichen geringer ist als die auftretende Fehlergröße des Positionsbestimmungssystems eines Fahrzeugs, das eine solche Straße befährt, so daß aktuelle Fahrzeugpositionen nicht eindeutig der Autobahn oder der gebührenfreien Straße zugeordnet werden können.

Die Erfindung sieht für eine Einrichtung mit den Merkmalen des Gattungsbegriffs des Patentanspruchs 1 vor, daß zu jeder Autobahnsektion im Landkartenspeicher der Einrichtung zwei Identifikationspunkte gespeichert sind, von denen der eine dem Anfang (Einfahrtmöglichkeit) und der andere dem Ende (Ausfahrtmöglichkeit) der Sektion entspricht. Vorzugsweise liegen die Identifikationspunkte, wie dies auch aus Fig. 2 hervorgeht, nicht im geometrischen Mittelpunkt (Schnittpunkt von Zubringerstraße und Autobahn) der jeweiligen Verzweigung, sondern sind in einem Mindestabstand davon innerhalb der Sektion angeordnet, wobei der Mindestabstand größer ist als die auftretende Meßungenauigkeit bei der Fahrzeugpositionsermittlung. Somit werden jeder Ein-/Ausfahrt einer Autobahn stets zwei Identifikationspunkte zugeordnet, die wiederum eindeutig jeweils einer der beiden mit dieser Ein-/Ausfahrt unmittelbar zusammenhängenden Sektionen zurechenbar sind. Auf diese Weise kann die erfindungsgemäße Einrichtung im Fahrzeug bereits erkennen, wenn eine aktuelle Fahrzeugposition als übereinstimmend mit einem Identifikationspunkt ermittelt wird, auf welcher Seite der Verzweigung, also in welcher Sektion sich das Fahrzeug befindet.

Es empfiehlt sich, zumindest einen, vorzugsweise beide Identifikationspunkte der Sektionen jeweils mit ihren absoluten Koordinaten, d. h. bezogen auf einen einzigen gemeinsamen Bezugspunkt, im Landkartenspeicher abzulegen. In diesem Fall kann jeweils, da jede Sektion zwei Fahrtrichtungen aufweist, die Einfahrt für beide Richtungsfahrbahnen jeweils durch einen der zur Sektion gehörigen Identifikationspunkte eindeutig gekennzeichnet werden. Der Identifikationspunkt, der für die eine Richtung die Einfahrt in die jeweilige Sektion kennzeichnet, repräsentiert für die andere Fahrtrichtung dieser Sektion im Regelfall jeweils die Ausfahrt. Eine solche Zuordnung läßt eine sehr einfache und schnelle Suche der betreffenden Punkte zu, wenn bei einem auf einer gebührenfreien Straße fahrenden Fahrzeug durch die Einrichtung geprüft wird, ob sich das Fahrzeug auf eine gebührenpflichtige Straße zubewegt und eventuell in diese einfährt. Hierzu ist es besonders vorteilhaft, wenn die Identifikationspunkte nach einer der beiden Koordinaten der Größe nach sortiert gespeichert vorliegen.

Um im Falle einer Signalverfälschung durch unvorhersehbare Außeneinflüsse bei der Ermittlung der aktuellen Fahrzeugposition ein irrtümliches Identifizieren einer Streckenbenutzung im nutzungsgebührenpflichtigen Straßennetz praktisch ausschließen zu können, begnügt sich die erfindungsgemäße Vorrichtung nicht mit dem Vergleich der aktuellen Fahrzeugposition mit den Identifikationspunkten. Vielmehr ist vorgesehen, daß zu jeder Sektion im Regelfall weitere Punkte des Straßenverlaufs im Landkartenspeicher abgelegt sind. Lediglich bei sehr kurzen und relativ gerade verlaufenden Sektionen kann sich dies ausnahmsweise erübrigen. Diese weiteren Punkte, die jeweils zwischen den beiden Identifikationspunkten liegen, werden im folgenden als Bestimmungspunkte bezeichnet. Sie werden vorzugsweise mit ihren bezüglich eines der beiden Identifikationspunkte der jeweiligen Sektion relativen Koordinaten im Landkartenspeicher gespeichert.

Die Auswahl der Bestimmungspunkte erfolgt erfindungsgemäß so, daß bei linearer Verbindung der unmittelbar benachbarten Identifikations- und Bestimmungspunkte einer Sektion untereinander ein Polygonzug entsteht, der näherungsweise dem tatsächlichen Straßenverlauf der Sektion entspricht. Dabei kann durch Verringerung des Abstandes zwischen zwei unmittelbar benachbarten Bestimmungspunkten bzw. zwischen einem Bestimmungspunkt und einem unmittelbar benachbarten Identifikationspunkt diese Annäherung an den tatsächlichen Straßenverlauf beliebig weit getrieben werden. Je genauer der Straßenverlauf nachgebildet wird, um so höher ist allerdings auch der zu treibende Aufwand für die Speicherung der Bestimmungspunkte. Für die Festlegung der Bestimmungspunkte kann ein Schwellenwert vorgegeben werden, der den maximal noch zulässigen senkrechten Abstand zwischen der Verbindungsstrecke von zwei unmittelbar benachbarten Bestimmungs- bzw. Identifikationspunkten und dem tatsächlichen Straßenverlauf (zugehörige Mittellinie) begrenzt. Dieser Schwellenwert sollten möglichst kleiner gewählt sein als der bei der Fahrzeugpositionsbestimmung maximal auftretende Fehler. Die Zone zwischen zwei unmittelbar benachbarten Bestimmungs- bzw. Identifikationspunkten ist in Fig. 2 als Segment bezeichnet.

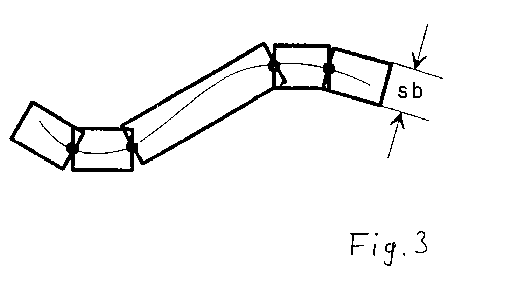

Ein weiteres wesentliches Merkmal der Erfindung besteht darin, daß die vom Fahrzeug mitgeführte Einrichtung einen vorgegebenen Abstandsgrenzwert gespeichert hat, der größer ist als die Meßungenauigkeit bei der Ermittlung der aktuellen Fahrzeugposition. Der Sinn dieses Abstandsgrenzwertes ist es, aus dem durch die Identifikations- und Bestimmungspunkte festgelegten linearen Modell des tatsächlichen Straßenverlaufs der Sektion ein aus Flächensegmenten zusammengesetztes flächenhaftes "Toleranzmodell" zu bilden, wie es in den Fig. 2 und 3 dargestellt ist. Die Länge dieser Segmente entspricht definitionsgemäß jeweils dem Abstand der zugeordneten beiden Identifikations- bzw. Bestimmungspunkte, während die Segmentbreite, die in Fig. 3 mit sb bezeichnet ist, das Doppelte des erwähnten Abstandsgrenzwertes ausmacht. Die Flächensegmente schließen somit alle diejenigen Orte ein, deren senkrechter Abstand von der Mittellinie des jeweiligen Segments, die näherungsweise dem Straßenverlauf entspricht, kleiner oder gleich dem vorgegebenen Abstandsgrenzwert ist.

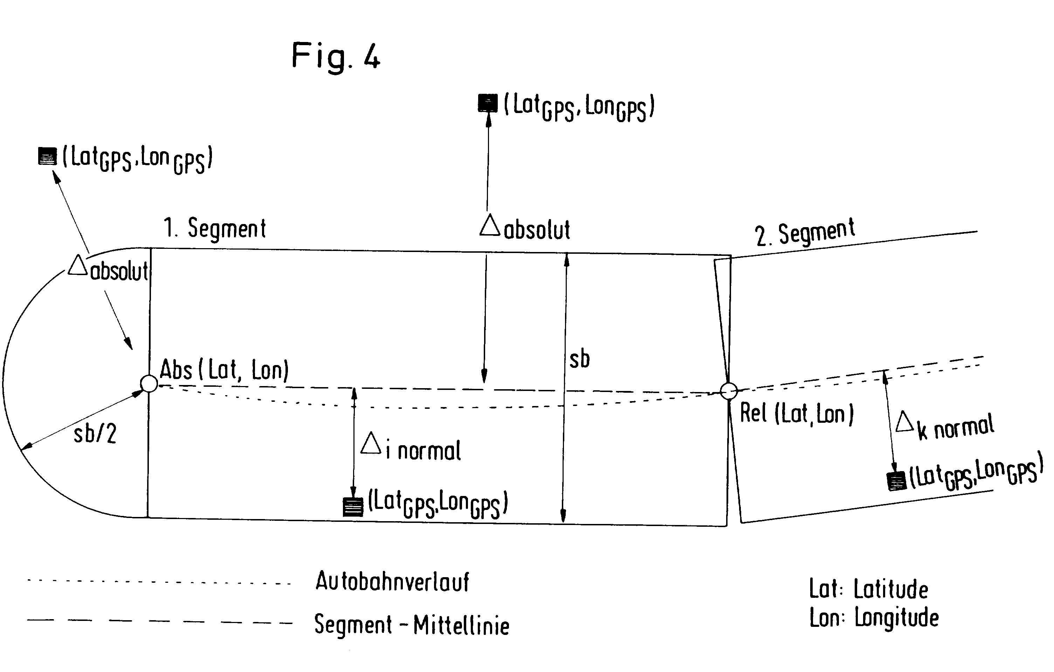

Die erfindungsgemäße Einrichtung prüft nun zur Sicherung der Aussage, daß ein Fahrzeug in eine Sektion des vorgegebenen Straßennetzes eingefahren ist und dieses Segment befährt, also entsprechende Nutzungsgebühren zu berechnen sind, ob sich das Fahrzeug tatsächlich durch die einzelnen Segmente des "Toleranzmodells" bewegt, sich also nicht auf einer gebührenfreien Straße befindet. Das "Toleranzmodell" kompensiert dabei die bei der aktuellen Positionsermittlung möglicherweise auftretende Meßungenauigkeit. Wie dies im einzelnen durch eine in die Programmierung der Vorrichtung einbezogene Fahrstreckenanalyse sichergestellt ist, soll im folgenden anhand der Fig. 4 exemplarisch erläutert werden.

Fig. 4 zeigt in einer vergrößerten Darstellung das in Fahrtrichtung erste und einen Teil des zweiten Segments einer Autobahnsektion, deren tatsächlicher Straßenverlauf als punktierte Linie dargestellt ist und durch den gestrichelten Polygonzug (Segmentmittellinien) angenähert wird. Das erste Segment beginnt am linken Identifikationspunkt Abs (Lat, Lon) der Sektion, der mit seinen absoluten Koordinaten gespeichert ist, während es mit dem ersten Bestimmungspunkt, der zugleich Anfangspunkt des zweiten Segments ist, endet. Der erste Bestimmungspunkt Rel (Lat, Lon) ist mit seinen auf den linken Identifikationspunkt bezogenen relativen Koordinaten im Landkartenspeicher der Einrichtung gespeichert.

Wenn das Fahrzeug sich außerhalb des vorgegebenen Straßennetzes befunden hat, stellt die erfindungsgemäße Einrichtung in der zuvor bereits dargelegten Weise durch Vergleich der ermittelen Koordinaten der aktuellen Fahrzeugposition (in Fig. 4 jeweils als schwarzes Quadrat markiert und durch (Lat_{GPS}, Lon_{GPS}) bezeichnet) mit den Koordinaten des Identifikationspunktes Abs (Lat, Lon) fest, ob und wieweit eine Annäherung an eine mögliche Einfahrtstelle beispielsweise des Autobahnnetzes stattgefunden hat. Sobald der absolute Abstand Δ_{absolut} zwischen der aktuellen Fahrzeugposition und dem Identifikationspunkt Abs (Lat, Lon), den die Recheneinrichtung ermittelt, kleiner als die Hälfte der Segmentbreite sb geworden ist, wird von der erfindungsgemäßen Einrichtung "vermutet", daß das Fahrzeug in die betreffende Sektion eingefahren ist. Wird danach tatsächlich eine Fahrzeugposition von der Einrichtung detektiert, die innerhalb des rechteckigen Flächenelements des ersten Segments liegt, bei der also der senkrechte Abstand Δ_{i normal} zur Segmentmittellinie kleiner als der vorgegebene Abstandsgrenzwert (halbe Segmentbreite sb) ist, dann beginnt die eigentliche Fahrstreckenanalyse, d. h. die Einrichtung führt in zeitlichen Abständen zyklische Überprüfungen des jeweiligen senkrechten Abstandes durch. Beispielsweise kann dies in einem zeitlichen Abstand von einer oder auch mehreren Sekunden geschehen. Insbesondere in relativ geradlinig verlaufenden Sektionen kann ein längerer Zeitabstand gewählt werden. Diese Fahrstreckenanalyse wird solange durchgeführt, bis das Fahrzeug die gebührenpflichtige Autobahn wieder verläßt. Um den Einfluß zufälliger Fehler, die das Meßergebnis der Positionsermittlung unangemessen verzerren, möglichst auszuschließen, ist die Recheneinrichtung erfindungsgemäß darauf eingerichtet, einen gleitenden Mittelwert Δₘᵢₜₜₑₗ des senkrechten Abstandes zu bestimmen und nicht die festgestellten Einzelwerte, sondern den gleitenden Mittelwert Δₘᵢₜₜₑₗ mit dem Abstandsgrenzwert zu vergleichen. Hierzu werden jeweils die letzten n (vorgegebene Anzahl) Abstandswerte aufsummiert, und es wird die Summe durch diese Anzahl n dividiert. Diese Überprüfung wird fortlaufend von Segment zu Segment weitergeführt. Der gleitende Mittelwert Δₘᵢₜₜₑₗ muß während der Fahrt zwischen zwei Identifikationspunkten stets unter dem vorgegebenen Abstandsgrenzwert liegen, sonst wird die Fahrstreckenanalyse abgebrochen. Wenn über alle Segmente der jeweiligen Sektion die Grenzwertbedingung für den gleitenden Mittelwert Δₘᵢₜₜₑₗ erfüllt ist, dann wird diese Sektion als vom Fahrzeug benutzt in der Einrichtung registriert.

Es ist zweckmäßig, "kritische Bereiche", in denen eine zuverlässige Zuordnung von Fahrzeugpositionsdaten zum Streckenverlauf des Landkartenspeichers nicht möglich ist (z. B. Tunnelstrecken ohne GPS-Empfangsmöglichkeit, Parallelstraßen in sehr geringem Abstand, Streckenabschnitte mit Verzerrungen der GPS-Signale durch Reflexionen), aus der vorbeschriebenen zyklischen Überprüfung des senkrechten Abstandes vollständig auszuklammern. Dies kann durch Einträge entsprechender Informationen in den Landkartenspeicher berücksichtigt werden. Parkplätze oder Raststätten an Autobahnen können u. U. einen größeren Abstand von der jeweiligen Segmentmittellinie haben, so daß ein Fahrzeug eine Position annehmen kann, die in jedem Fall außerhalb des Flächensegments liegt. Um keine Fehlinterpretationen zuzulassen, sollten diese Bereich als "kritische Bereiche" aus der Überwachung der erfindungsgemäßen Einrichtung ausgeklammert sein.

In Weiterbildung der Erfindung kann vorgesehen sein, daß die Recheneinrichtung ein Signal generiert, welches eine Störung und/oder die Registrierung des Zustands bewirkt, daß die betrachtete Sektion als vom Fahrzeug nicht befahren gilt, wenn sich das Fahrzeug noch vor Erreichen des in Fahrtrichtung letzten Segments der Sektion über den vorgegebenen Abstandsgrenzwert hinaus dauerhaft von der jeweiligen Verbindungsstrecke des betrachteten und der zum Ende der Sektion noch folgenden Segmente entfernt.

Die erfindungsgemäße Einrichtung gewährleistet mit einem Höchstmaß an Sicherheit, daß z. B. bei einem Einsatz im Rahmen eines Autobahngebührenabrechnungssystems keinem Fahrzeug die Benutzung einer Sektion angerechnet wird, wenn es diese Sektion tatsächlich nicht benutzt hat. Umgekehrt werden aber auch die tatsächlichen Benutzungen mit einer hohen Zuverlässigkeit erfaßt, da der Einfluß zufälliger Meßfehler des Positionsbestimmungssystems weitestgehend ausgeschaltet ist.

## Patentansprüche

1. Einrichtung in einem Fahrzeug zur Feststellung des Befahrens einer Sektion eines vorgegebenen, insbesondere eines nutzungsgebührenpflichtigen Straßennetzes durch das Fahrzeug,
- mit einem Empfangssystem zum drahtlosen Empfang von Signalen, insbesondere von Signalen für die Satellitennavigation, zur Bestimmung der aktuellen geografischen Position des Fahrzeugs,
- mit einer Recheneinrichtung, die zur Bestimmung der aktuellen geografischen Fahrzeugposition eingerichtet ist,
- mit einer Landkartenspeicher für die digitale Speicherung des insbesondere nutzungsgebührenpflichtigen Straßennetzes, wobei die Koordinaten der Verzweigungen des vorgegebenen Straßennetzes als Identifikationspunkte gespeichert sind und
- mit einem Positionsspeicher für die digitale Speicherung von geografischen Positionsdaten, die von der Recheneinrichtung ermittelt wurden,
- wobei im Landkartenspeicher die Koordinaten von jeweils zwei Identifikationspunkten zu jeder Sektion gespeichert sind, die jeweils dem Anfang bzw. dem Ende dieser Sektion entsprechen, wobei Anfang und Ende der Sektion insbesondere zwei unmittelbar aufeinander folgenden Verzweigungen des Straßennetzes entsprechen,
- wobei im Landkartenspeicher darüber hinaus die Koordinaten weiterer Punkte als Bestimmungspunkte gespeichert sind, die jeweils zwischen den Identifikationspunkten der Sektion liegen, wobei die Bestimmungspunkte in der Weise ausgewählt sind, daß die linearen Verbindungsstrecken zwischen den unmittelbar benachbarten Identifikations- und Bestimmungspunkten einen den tatsächlichen Straßenverlauf der Sektion angenähert wiedergebenden Polygonzug bilden,
- wobei ein Abstandsgrenzwert gespeichert ist, der größer ist als die Meßungenauigkeit bei der Ermittlung der aktuellen Fahrzeugposition,
- wobei die Recheneinrichtung in zeitlichen Abständen zyklisch den jeweiligen senkrechten Abstand der gerade ermittelten aktuellen Fahrzeugposition von der nächstliegenden Verbindungsstrecke des Polygonzugs ermittelt,
- wobei die Einzelwerte einer vorgegebenen Anzahl n der zuletzt gemessenen senkrechten Abstände fortlaufend aufsummiert werden und die jeweilige Summe zum Erhalt eines gleitenden Mittelwertes durch die Anzahl n dividiert wird und
- wobei die jeweilige Sektion von der Recheneinrichtung als befahren registriert wird, wenn der gleitende Mittelwert über alle linearen Verbindungsstrecken der Sektion ausnahmslos unterhalb des vorgegebenen Abstandsgrenzwertes geblieben ist.

2. Einrichtung nach Anspruch 1,
dadurch gekennzeichnet,
daß die Bestimmungspunkte einer Sektion in der Weise ausgewählt sind, daß der senkrechte Abstand der Verbindungsstrecke zwischen zwei unmittelbar benachbarten Bestimmungs- oder Identifikationspunkten zum tatsächlichen Straßenverlauf der Sektion stets unter einem vorgegebenen Schwellenwert bleibt.

3. Einrichtung nach Anspruch 2,
dadurch gekennzeichnet,
daß der Schwellenwert in der Größenordnung unterhalb der Meßungenauigkeit bei der Bestimmung der Fahrzeugposition liegt.

4. Einrichtung nach einem der Ansprüche 1 bis 3,
dadurch gekennzeichnet,
daß zumindest einer der Identifikationspunkte jeder Sektion mit seinen absoluten Koordinaten gespeichert ist.

5. Einrichtung nach einem der Ansprüche 1 bis 4,
dadurch gekennzeichnet,
daß die gespeicherten Identifikationspunkte einer Sektion innerhalb der Sektion liegen, und zwar jeweils um mindestens den bei der Bestimmung der Fahrzeugposition auftretenden Betrag der Meßungenauigkeit entfernt vom geometrischen Anfangs- bzw. Endpunkt der Sektion.

6. Einrichtung nach einem der Ansprüche 1 bis 5,
dadurch gekennzeichnet,
daß die Bestimmungspunkte mit ihren relativen Koordinaten bezogen auf einen der beiden zugehörigen Identifikationspunkte der Sektion gespeichert sind.

7. Einrichtung nach einem der Ansprüche 1 bis 6,
dadurch gekennzeichnet,
daß der Landkartenspeicher Informationen über kritische Bereiche einer Sektion enthält, in denen ein Vergleich der aktuellen Positionsdaten des Fahrzeugs mit den Werten des Polygonzugs nicht oder nicht mit ausreichender Sicherheit durchführbar ist, und daß die Recheneinrichtung diese kritischen Bereiche bei der Auswertung unberücksichtigt läßt.

8. Einrichtung nach einem der Ansprüche 1 bis 7,
dadurch gekennzeichnet,
daß die Recheneinrichtung ein Signal generiert, welches eine Störung und/oder die Registrierung des Zustandes bewirkt, daß die betrachtete Sektion als vom Fahrzeug nicht befahren gilt, wenn sich das Fahrzeug noch vor Erreichen des in Fahrtrichtung letzten Segments der Sektion über den vorgegebenen Abstandsgrenzwert hinaus dauerhaft von der jeweiligen Verbindungsstrecke des betrachteten und der bis zum Ende der Sektion noch folgenden Segmente entfernt.

## Claims

1. Device in a vehicle for ascertaining entry of the vehicle to a section of a predetermined street network which is in particular subject to a toll,
■ comprising a receiver system for the wireless reception of signals, in particular signals for satellite navigation for determining the current geographical position of the vehicle,
■ comprising a computing device set to determine the current geographical position of the vehicle,
■ comprising a map store for the digital storage of the street network which is in particular subject to a toll, the coordinates of the branches of the predetermined street network being stored as identification points, and
■ comprising a storage device for the digital storage of geographical position data, which have been determined by the computing device,
■ wherein in the map store the coordinates of every two identification points are stored for every section, each corresponding to the beginning or end of that section, the beginning and end of the section corresponding in particular to two directly consecutive branches in the street network,
■ wherein in the map store furthermore, the coordinates of further points are stored as determining points, each lying between the identification points of the section, the determining points being so selected that the linear connecting sections between the directly adjacent identification and determining points form a progression roughly reproducing the actual street path of the section,
■ wherein a distance limit value is stored, which is greater than the measurement inaccuracy in determining the current vehicle position,
■ wherein the computing device determines cyclically at time intervals the respective perpendicular distance of the already determined current vehicle position from the next connecting section of the progression,
■ wherein the individual values of a predetermined number n of the last measured perpendicular distances are continuously added up and the respective total is divided by the number n to obtain a sliding average value, and
■ wherein the respective section is registered by the computing device as having been traversed if the sliding average value has remained below the predetermined distance limit value without exception over all linear connecting sections of the road section.

2. Device according to claim 1, characterised in that the determining points of a section are so selected that the perpendicular distance of the connecting section between directly adjacent determining or identification points for the actual street path of the section always remains below a predetermined threshold value.

3. Device according to claim 2, characterised in that the threshold value lies in the range below the measuring inaccuracy in determining the vehicle position.

4. Device according to one of claims 1 to 3, characterised in that at least one identification point of each section is stored with its absolute coordinates.

5. Device according to one of claims 1 to 4, characterised in that the stored identification points of a section lie within the section, in particular respectively by at least the amount of measuring inaccuracy arising in determination of the vehicle position remote from the geometric beginning or end point of the section.

6. Device according to one of claims 1 to 5, characterised in that the determining points are stored with respect to their relative coordinates on one of the two associated identification points of the road section.

7. Device according to one of claims 1 to 6, characterised in that the map store contains data about critical regions of a section, in which comparison of the current position data of the vehicle with the values of the progression cannot be carried out or cannot be carried out with sufficient safety, and in that the computing device leaves these critical regions unconsidered in the evaluation.

8. Device according to one of claims 1 to 7, characterised in that the computing device generates a signal which effects interference and/or registration of the state, in that the observed road section counts as not traversed by the vehicle if the vehicle, even before reaching the last segment of the section in the direction of travel beyond the predetermined distance limit value, is permanently remote from the respective connecting section of the observed segment and segments following until the end of the section.

## Revendications

1. Dispositif dans un véhicule pour déterminer la circulation du véhicule sur une section d'un réseau routier prédéfini, en particulier à péage,
- comportant un système de réception pour la réception sans fil de signaux, en particulier des signaux pour la navigation par satellite, afin de déterminer la position géographique actuelle du véhicule,
- comportant un dispositif de calcul formé pour déterminer la position géographique actuelle du véhicule,
- comportant une mémoire à carte géographique pour l'enregistrement numérique du réseau routier en particulier à péage, les coordonnées des ramifications du réseau routier prédéfini étant stockées comme points d'identification, et
- comportant une mémoire de position pour l'enregistrement numérique de données de position géographique, qui sont déterminées par le dispositif de calcul,
- dans la mémoire à carte géographique, les coordonnées de à chaque fois deux points d'identification qui correspondent respectivement au début et à la fin de la section étant enregistrées pour chaque section, le début et la fin de la section correspondant en particulier à deux ramifications directement successives du réseau routier,
- dans la mémoire à carte géographique, les coordonnées d'autres points étant en outre enregistrées comme points de détermination, points qui sont situés à chaque fois entre les points d'identification de la section, les points de détermination étant choisis de sorte que les liaisons linéaires entre les points d'identification et de détermination directement adjacents forment un tracé polygonal qui reproduit de façon approximative le tracé effectif de la route sur la section,
- une valeur limite de distance qui est plus grande que la précision de mesure lors de la détermination de la position actuelle du véhicule, étant enregistrée,
- le dispositif de calcul déterminant suivant des écarts temporels, de façon cyclique, la distance orthogonale de la position du véhicule actuelle juste déterminée par rapport à la liaison la plus proche du tracé polygonal,
- les valeurs individuelles d'un nombre prédéfini n de distances orthogonales mesurées en dernier étant sommées en continu et la somme correspondante étant divisée par le nombre n pour obtenir une valeur moyenne variable, et
- la section pour laquelle la valeur moyenne variable pour toutes les liaisons linéaires de la section est toujours restée inférieure à la valeur limite de distance prédéfinie, étant enregistrée par le dispositif de calcul comme étant parcourue,.

2. Dispositif selon la revendication 1,
caractérisé en ce que les points de détermination d'une section sont choisis de sorte que la distance orthogonale de la liaison entre deux points de détermination ou d'identification directement adjacents, par rapport au trajet de route effectif de la section, reste toujours inférieure à une valeur de seuil prédéfinie.

3. Disposiitf selon la revendication 2,
caractérisé en ce que la valeur de seuil présente un ordre de grandeur situé au-dessous de la précision de mesure lors de la détermination de la position du véhicule.

4. Dispositif selon l'une des revendications 1 à 3,
caractérisé en ce qu'au moins l'un des points d'identification de chaque section est enregistré avec des coordonnées absolues.

5. Dispositif selon l'une des revendications 1 à 4,
caractérisé en ce que les points d'identification enregistrés d'une section sont situés à l'intérieur de la section et, à savoir, à chaque fois en étant éloignés, au moins de la valeur apparaissant lors de la détermination de la position du véhicule pour la précision de la mesure, des points géométriques de début et de fin de section.

6. Dispositif selon l'une des revendications 1 à 5,
caractérisé en ce que les points de détermination sont enregistrés avec leurs coordonnées relatives par rapport à l'un des deux points d'identification associés de la section.

7. Dispositif selon l'une des revendications 1 à 6,
caractérisé en ce que la mémoire à carte géographique comporte des informations sur des zones critiques de la section, dans lesquelles une comparaison des données de position actuelles du véhicule avec les valeurs du tracé polygonal ne peut pas être réalisée ou ne peut pas être réalisée avec une sécurité suffisante, et en ce que le dispositif de calcul ne tient pas compte de ces zones critiques lors de l'évaluation.

8. Dispositif selon l'une des revendications 1 à 7,
caractérisé en ce que le dispositif de calcul engendre un signal qui provoque une perturbation et/ou l'enregistrement de l'état, en ce que la section prise en compte n'est pas considérée comme parcourue par le véhicule lorsque le véhicule s'éloigne, avant d'avoir atteint le dernier segment de la section dans le sens de roulement, au-delà de la valeur limite de distance prédéfinie, de façon permanente, de la liaison correspondante du segment considéré et des segments qui suivent encore jusqu'à la fin de la section.
